# EUROPEAN PATENT APPLICATION

(11) **EP 4 718 663 A1**
(43) Date of publication of application: **01.04.2026**
(21) Application number: 24860282.3
(22) Date of filing: 20.08.2024
(51) Int. Cl.: H02J 3/38, H02J 3/32, H02J 7/34, H02J 3/00

(54) **ENERGY STORAGE SYSTEM AND OPERATING METHOD THEREOF**

(30) Priority: 25.08.2023 KR 20230112144
(71) Applicant: LG Energy Solution, Ltd., Seoul 07335 (KR)
(72) Inventor: CHUNG, Moon Koo, Daejeon 34122 (KR)
(74) Representative: BCKIP Part mbB
(86) International application number: PCT/KR2024/012336
(87) International publication number: WO 2025/048361

(57) **Abstract**

An energy storage system according to one embodiment disclosed herein includes an inverter electrically connected to a grid, a converter configured to receive a communication signal and an enable signal related to an operating state of the inverter from the inverter and connected to the inverter through a power transmission line, and a controller configured to determine an outage state of the grid or a power supply state from the inverter to the converter based on the communication signal and the enable signal.

## Description

### TECHNICAL FIELD

### CROSS-REFERENCE TO RELATED APPLICATION

This application claims priority to and the benefit of Korean Patent Application No. 10-2023-0112144 filed in the Korean Intellectual Property Office on August 25, 2023, the entire contents of which are incorporated herein by reference.

### TECHNICAL FIELD

Embodiments disclosed herein relate to an energy storage system for determining an outage state of a grid and a method of operating the same.

### BACKGROUND ART

An energy storage system (ESS) is a device that can achieve the efficient use of power by temporarily storing power generated from a power plant, etc. from a grid during a period of less power demand and supplying the stored power to the grid during a period of more power demand. Recently, interest in residential ESSs that may store power generated using solar power, etc. has been increasing.

The ESS largely includes an inverter connected to a grid, a battery for storing power supplied by the grid, a converter for performing DC-DC conversion, etc.

The ESS performs a recovery operation for supplying power, etc. in preparation for an unexpected outage or failure. In the event of an outage in the grid or a problem with the inverter, the power stored in the battery should be supplied, but there is a problem that since the converter has difficulty recognizing the outage or the problem with the inverter, a user needs to operate the ESS to perform the recovery operation, etc.

### DISCLOSURE

### TECHNICAL PROBLEM

Embodiments disclosed herein are directed to providing an energy storage system for determining an outage state of a grid and a method of operating the same.

The objects of the embodiments disclosed herein are not limited to the above-described objects, and other objects that are not described will be able to be clearly understood by those skilled in the art from the following description.

### TECHNICAL SOLUTION

An energy storage system according to one embodiment disclosed herein may include an inverter electrically connected to a grid, a converter configured to receive a communication signal and an enable signal related to an operating state of the inverter from the inverter and connected to the inverter through a power transmission line, and a controller configured to determine an outage state of the grid based on the communication signal and the enable signal.

According to one embodiment, when the communication signal is not received for a preset threshold time, the controller may check whether the inverter is in the operating state based on the enable signal received through a second communication line connected between the inverter and the converter.

According to one embodiment, when the enable signal is in a logic high state representing that the inverter is in the operating state, the controller may determine that it is a communication failure state that is a state in which the communication signal is not received between the inverter and the converter.

According to one embodiment, the energy storage system may further include a battery module connected to the converter to store power supplied from the inverter, wherein, when the enable signal is in a logic low state representing that the inverter is in a non-operating state, the controller may control the battery module and the converter to supply the power stored in the battery module to the inverter.

According to one embodiment, when a voltage of the battery module is a voltage that sufficiently turns on the inverter, the controller may supply power to the inverter.

According to one embodiment, the controller may check whether the inverter is in an operating state based on an enable signal received after the power is supplied to the inverter.

According to one embodiment, when the enable signal received after the power is supplied is in the logic low state representing that the inverter is in the non-operating state, the controller may determine that a failure has occurred in a power supply device connected to the inverter to drive the inverter.

According to one embodiment, when the enable signal received after the power is supplied is in a logic high state representing that the inverter is in an operating state, the controller may control the converter to transmit a request signal for requesting a communication signal from the inverter to the inverter.

According to one embodiment, the communication signal may be received through a first communication line connected between the inverter and the converter, and when a communication signal provided by the inverter in response to the request signal is not received within a preset reference time, the controller may determine that a failure has occurred in the first communication line.

According to one embodiment, when a communication signal provided by the inverter in response to the request signal is received within the threshold time, the controller may determine that an outage has occurred in the grid.

A method of operating an energy storage system according to one embodiment disclosed herein may include determining a communication state between an inverter and a converter, determining an operating state of the inverter based on the communication state, supplying power to the inverter, and determining an outage state of a grid electrically connected to the inverter based on a communication signal received between the inverter and the converter.

According to one embodiment, the determining of the communication state between the inverter and the converter may include determining whether the communication signal received through a first communication line connected between the inverter and the converter is received for a preset threshold time.

According to one embodiment, the determining of the operating state of the inverter may include receiving an enable signal related to the operating state of the inverter through a second communication line connected between the inverter and the converter, and determining that a communication fail has occurred between the inverter and the converter when the enable signal is in a logic high state.

According to one embodiment, the supplying of the power to the inverter may include controlling a battery module and the converter to supply power stored in the battery module connected to the converter to the inverter, and determining that a failure has occurred in a power supply device connected to the inverter to supply power to the inverter when the enable signal received through the second communication line is in a logic low state and transmitting a request signal for requesting a communication signal from the inverter to the inverter when the enable signal is in a logic high state.

According to one embodiment, the supplying of the power to the inverter may be performed when a voltage of the battery module is a voltage that sufficiently turns on the inverter.

According to one embodiment, the determining of the outage state of the grid may include determining that a failure has occurred in the first communication line when the communication signal provided by the inverter in response to the request signal is not received within a preset reference time and determining that an outage has occurred in the grid when the communication signal provided by the inverter in response to the request signal is received within the preset reference time.

### ADVANTAGEOUS EFFECTS

According to the energy storage system and the method of operating the same according to one embodiment disclosed herein, it is possible to determine the outage state of the grid and supply power to the inverter.

### DESCRIPTION OF DRAWINGS

FIG. 1 is a view for describing an energy storage system and nearby components according to one embodiment disclosed herein.
FIG. 2 is a view for describing the energy storage system according to one embodiment disclosed herein.
FIG. 3 is a view for describing an operation of the energy storage system and a controller over time according to one embodiment disclosed herein.
FIG. 4 is a view for schematically describing an operation of the energy storage system according to one embodiment disclosed herein.
FIG. 5 is a flowchart for specifically describing the operation of the energy storage system according to one embodiment disclosed herein.

### MODE FOR INVENTION

Hereinafter, embodiments disclosed herein will be described in detail with reference to exemplary drawings. In adding reference numerals to components in each drawing, it should be noted that the same components have the same reference numerals as much as possible even when they are shown in different drawings. In addition, in describing embodiments disclosed herein, the detailed description of related known configurations or functions will be omitted when it is determined that the detailed description obscures the understanding of the embodiments disclosed herein.

The terms, such as first, second, A, B, (a), and (b) may be used to describe components of the embodiments disclosed in this document. These terms are only for the purpose of distinguishing one component from another component, and the nature, sequence, order, or the like of the corresponding component is not limited by the terms. In addition, unless otherwise defined, all terms (including technical and scientific terms) used herein have the same meanings as those commonly understood by those skilled in the art to which embodiments disclosed herein pertains. The terms defined in a generally used dictionary should be construed as meanings that match with the meanings of the terms from the context of the related technology and are not construed as an ideal or excessively formal meaning unless clearly defined in this application.

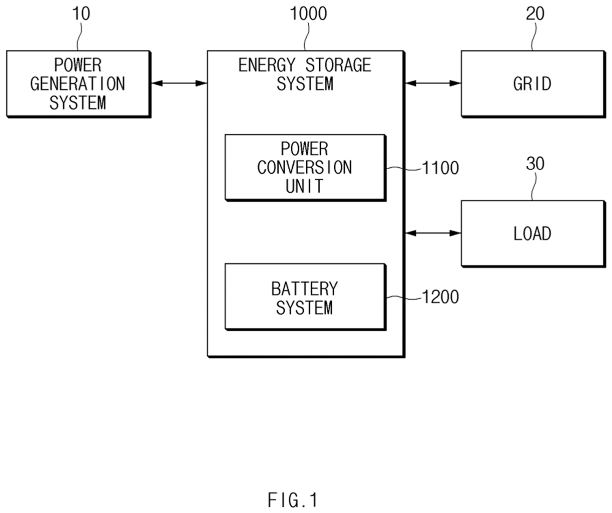

FIG. 1 is a view for describing an energy storage system and nearby components according to one embodiment disclosed herein.

Referring to FIG. 1, an energy storage system 1000 may be electrically connected to a power generation system 10, a grid 20, and a load 30.

The power generation system 10 may be a system for generating power using an energy source. The power generated by the power generation system 10 may be supplied to the energy storage system 1000. The power generation system 10 may include a solar power generation system, a wind power generation system, a tidal power generation system, etc., but is not limited to these examples. For example, the power generation system 10 may include a system for generating power using renewable energy such as solar heat, solar energy, or geothermal energy.

The grid 20 may be a network connected between power generators and power consumers as having a concept including a power plant for generating power, a substation for increasing or decreasing a voltage for transmission/distribution, a transmission line that transmits power, a distribution line that transmits power to power consumers, etc. When the grid 20 operates normally, the grid 20 may supply power to the energy storage system 1000. In addition, the grid 20 may receive power from the energy storage system 1000. When the grid 20 does not operate normally, the power supply from the grid 20 to the energy storage system 1000 may be stopped. In addition, the power supply from the energy storage system 1000 to the grid 20 may also be stopped.

According to an embodiment, a case wherein the grid 20 does not operate normally may include a case where an outage occurs in the grid 20.

The load 30 may consume power generated by the power generation system 10, power stored in the energy storage system 1000, or power supplied from the grid 20. For example, the load 30 may collectively refer to a consumer that consumes power, such as a factory or a home.

The energy storage system 1000 may include a power conversion unit 1100 and a battery system 1200.

The power conversion unit 1100 may appropriately convert power when the energy storage system 1000 provides power to the grid 20 or the load 30 or when the power generation system 10 provides power to the energy storage system 1000. The power conversion unit 1100 may include a power conversion system (PCS). The power conversion unit 1100 may convert AC power into DC power or convert DC power into AC power.

The battery system 1200 may store power provided by the power generation system 10 or the grid 20. When the energy storage system 1000 provides power to the grid 20 or the load 30, the energy storage system 1000 may provide power stored in the battery system 1200. The battery system 1200 may include a battery rack, a battery module, a battery pack, etc. for storing power.

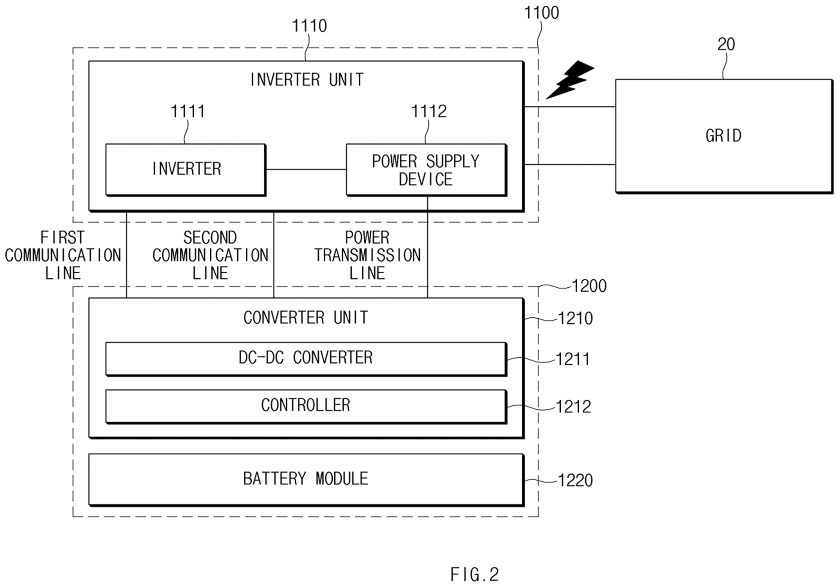

FIG. 2 is a view for describing the energy storage system according to one embodiment disclosed herein.

Referring to FIG. 2, the power conversion unit 1100 may include an inverter unit 1110, and the battery system 1200 may include a converter unit 1210 and a battery module 1220.

The battery system 1100 may convert the power provided by the power generation system 10 or the grid 20 shown in FIG. 1. The power conversion unit 1100 may include the inverter unit 1110.

An inverter 1111 included in the inverter unit 1110 may convert AC power provided by the power generation system or the grid 20 into DC power. In addition, the inverter 1111 may convert DC power provided by the battery system 1200 into AC power. The inverter 1111 may be a bidirectional inverter. A power supply device 1112 may provide power to the inverter 1111 to drive the inverter 1111.

The battery system 1200 may store the power provided by the power generation system 10 or the grid 20 shown in FIG. 1. The battery system 1200 may include the converter unit 1210 and the battery module 1220.

The converter unit 1210 may include a DC-DC converter 1211 and a controller 1212. The DC-DC converter 1211 may convert DC power received from the inverter unit 1110 into DC power to be stored in the battery module 1220 or convert a DC level of the DC power stored in the battery module 1220 before transmitting the DC power to the grid 20 or the load. The DC-DC converter 1211 may be implemented as a linear regulator, etc.

The inverter unit 1110 and the converter unit 1210 may be connected based on at least one communication line and power transmission line.

According to an embodiment, the inverter unit 1110 and the converter unit 1210 may be connected through a first communication line, a second communication line, and a power transmission line.

The first communication line may be a bidirectional communication line connecting the inverter unit 1110 to the converter unit 1210. The inverter unit 1110 may transmit a communication signal to the converter unit 1210 through the first communication line, and the converter unit 1210 may receive the communication signal provided by the inverter unit 1110 through the first communication line.

According to an embodiment, the first communication line may be a communication line that may check a communication state between the inverter unit 1110 and the converter unit 1210. When the communication signal is not transmitted or received between the inverter unit 1110 and the converter unit 1210 through the first communication line for a preset threshold time, there may be a loss of communication (LOC) state that is a state in which communication is poor between the inverter unit 1110 and the converter unit 1210.

According to an embodiment, the communication signal may include a plurality of signals exchanged between the inverter unit 1110 and the converter unit 1210. For example, the communication signal may include a request signal requesting the converter unit 1210 to respond to the inverter unit 1110. In addition, the communication signal may include a heartbeat signal provided by the inverter unit 1110 to the converter unit 1210 in response to the request signal. The heartbeat signal is a signal that occurs periodically in response to the request signal and may be a signal related to the communication state between the inverter unit 1110 and the converter unit 1210.

According to an embodiment, the inverter unit 1110 and the converter unit 1210 may be connected according to the RS-485 communication standard through the first communication line, but are not limited thereto and may be connected by various communication standards, communication standards, or communication protocols.

The second communication line may be a unidirectional communication line connecting the inverter unit 1110 to the converter unit 1210. That is, a subject transmitting the signal and a subject receiving the signal through the second communication line may not change.

According to an embodiment, the inverter unit 1110 may transmit the signal through the second communication line, and the converter unit 1210 may receive the signal transmitted by the inverter unit 1110 through the second communication line. The inverter unit 1110 may transmit an enable signal to the converter unit 1210 through the second communication line. The enable signal may be a signal related to the operation of the inverter unit 1110 and may be a signal represented as 1 bit indicating whether the inverter unit 1110 operates normally.

According to an embodiment, when the enable signal is in a logic high state, which may represent that the inverter unit 1110 is in a state of operating normally. In addition, when the enable signal is in a logic low state, which may represent that the inverter unit 1110 is in a state of not operating normally.

According to an embodiment, the logic high state may be a state in which a bit value is '1,' and the logic low state may be a state in which the bit value is '0,' but the present document is not limited thereto, and depending on a design, the logic high state may be a state when the bit value is '0,' and the logic low state may be a state when the bit value is '1.'

According to an embodiment, the state in which the inverter unit 1110 does not operate normally may include a state in which the inverter unit 1110 does not supply power to the converter unit 1210 through the power transmission line.

The power transmission line may be a line that transmits power between the inverter unit 1110 and the converter unit 1210. For example, the inverter unit 1110 may appropriately convert the power supplied by the grid 20 and transmit the converted power to the converter unit 1210 through the power transmission line. The power transmission line may include a switch (not shown).

According to an embodiment, the power transmission line may be connected to the power supply device 1112 included in the inverter unit 1110. The power supply device 1112 may control the power of the inverter 1111 based on the power provided by the converter unit 1210. In addition, the power supply device 1112 may entirely manage the power provided by the grid 20 or the power generation system 10 shown in FIG. 1.

According to an embodiment, when the grid 20 normally supplies power to the energy storage system 1000 stored in FIG. 1, a switch (not shown) of the power transmission line may be disconnected.

According to an embodiment, when an outage occurs in the grid 20 and the power stored in the battery module 1220 should be supplied to the grid 20, the switch of the power transmission line may be connected.

The controller 1212 may control the overall operation of the converter unit 1210.

The converter unit 1210 may be electrically connected to the battery module 1220, and the controller 1212 may control the converter unit 1210 to store the power received by the converter unit 1210 in the battery module 1220.

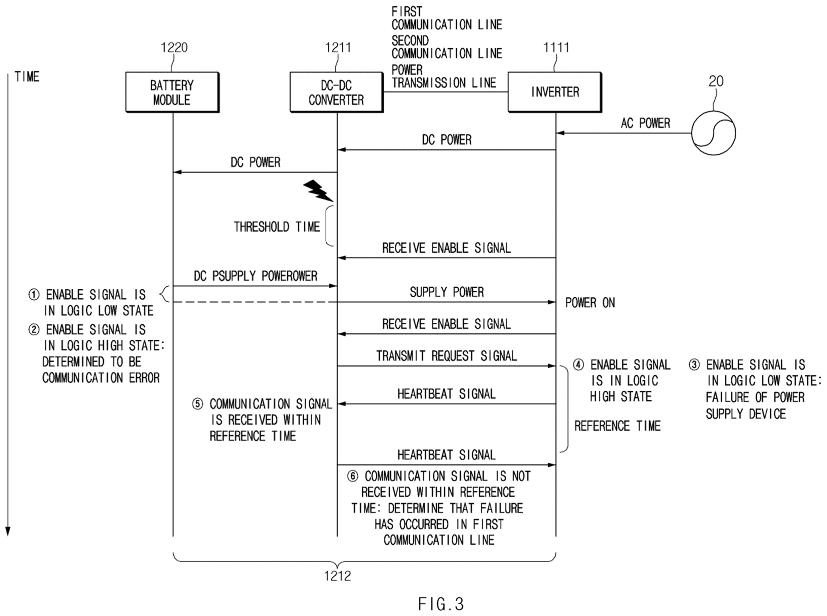

The controller 1212 may control the converter unit 1210 to supply power from the battery module 1220 to the grid 20 when an outage occurs in the grid 20. In addition, the controller 1212 may control the converter unit 1210 to supply power to the inverter unit 1110 when the inverter unit 1110 does not operate normally. The operation of the controller 1212 will be described below in the description of FIG. 3.

FIG. 3 is a view for describing operations of the energy storage system and a controller over time according to one embodiment disclosed herein.

Referring to FIG. 3, operations between the components 1111, 1211, and 1220 included in the energy storage system over time is shown.

The inverter 1111 may convert the AC power provided by the grid 20 into DC power. The inverter 1111 may convert the AC power into the DC power and transmit the DC power to the DC-DC converter 1211.

The DC-DC converter 1211 may convert a level of the received DC power into a level of DC power that may be stored in the battery module 1220. The DC power converted by the DC-DC converter 1211 may be transmitted to the battery module 1220. The battery module 1220 may store the DC power transmitted by the DC-DC converter 1211.

As time goes by, there may be the LOC state, which is a state in which communication is poor between the inverter 1111 and the DC-DC converter 1211. According to an embodiment, the LOC state may be a state in which a communication signal is not transmitted or received through a first communication line for a preset threshold time.

The controller 1212 may check the enable signal received from the inverter 1111 when there is no communication signal transmitted or received through the first communication line for the threshold time.

According to an embodiment, the enable signal may be a signal related to the operation of the inverter 1111. For example, when the enable signal is in a logic high state, the inverter 1111 may be in a state of operating normally, and when the enable signal is in a logic low state, the inverter 1111 may be in a state of not operating normally.

According to an embodiment, when the enable signal is in the logic high state, power may be supplied from the inverter to the converter. When the enable signal is in the logic low state, power may not be supplied from the inverter to the converter.

When the enable signal is in the logic low state (①), the controller 1212 may determine that the inverter 1111 is in a state of not operating normally. The controller 1212 may control the battery module 1220 and the DC-DC converter 1211 to supply the power stored in the battery module 1220 to the inverter 1111. The power stored in the battery module 1220 may be transmitted to the inverter 1111 through the DC-DC converter 1211 and the power transmission line.

According to an embodiment, when the enable signal is in the logic low state (①), the controller 1212 may check whether the voltage of the battery module 1220 sufficiently turns on the inverter 1111. The controller 1212 may control the battery module 1220 and the DC-DC converter 1211 to supply power to the inverter 1111 when the voltage of the battery module 1220 sufficiently turns on the inverter 1111.

When the enable signal is in the logic high state (②), the controller 1212 may determine that the inverter 1111 is in a state of operating normally. Although the inverter 1111 is in the state of operating normally, since no communication signal is transmitted or received through the first communication line for the threshold time, the controller 1212 may determine that a communication failure has occurred between the inverter 1111 and the DC-DC converter 1211.

According to an embodiment, the communication failure state may include the LOC state.

When returning back to the case where the enable signal is in the logic low state (①), the controller 1212 may check the operating state of the inverter 1111 based on the enable signal received after power is provided to the inverter 1111.

When the enable signal is in the logic low state (③), the controller 1212 may determine that a problem has occurred in the power supply device connected to the inverter 1111 to drive the inverter 1111. This is because sufficient power to turn on the inverter 1111 is transmitted from the battery module 1220, but the inverter 1111 is in a state of not operating normally. The power supply device may be the power supply device 1112 shown in FIG. 2.

When the enable signal is in the logic high state (④), the controller 1212 may control the DC-DC converter 1211 to transmit the request signal to the inverter 1111 through the first communication line.

According to an embodiment, the request signal may be a signal requesting the DC-DC converter 1211 to respond to the inverter 1111.

The controller 1212 may control the DC-DC converter 1211 to transmit the request signal to the inverter 1111 and check whether the communication signal is received within a preset reference time. According to an embodiment, the communication signal may be a heartbeat signal.

According to an embodiment, the reference time may be 10 seconds, but is not limited thereto, and the reference time may be changed in various ways depending on the design.

When the communication signal is received within the reference time (⑤), the controller 1212 may determine that an outage has occurred in the grid 20. When the communication signal is not received within the reference time (⑥), the controller 1212 may determine that a failure has occurred in the first communication line.

The controller 1212 may detect the outage that has occurred in the grid 20 through the above process. In addition, the controller 1212 may perform various diagnosis processes in the process of detecting the outage in the grid 20. That is, the controller 1212 may supply power to the inverter 1111 when the inverter 1111 is in the state of not operating using the enable signal and determine whether the inverter 1111 fails based on the subsequent enable signal. In addition, the controller 1212 may control the DC-DC converter 1211 to transmit the request signal and determine whether the communication line fails based on the received heartbeat signal. Therefore, the controller 1212 may not only directly detect the outage situation of the grid 20, but also determine whether the inverter 1111, the converter 1211, etc. fail in the process of detecting the outage of the grid 20 and increase the reliability of detecting the outage occurring in the grid 20.

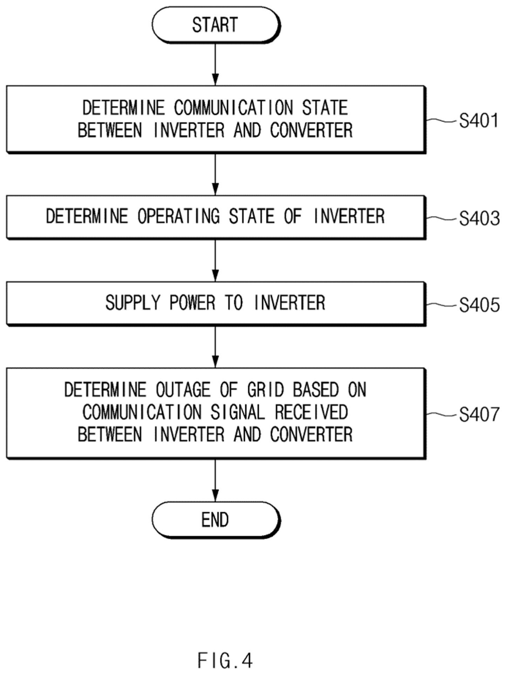

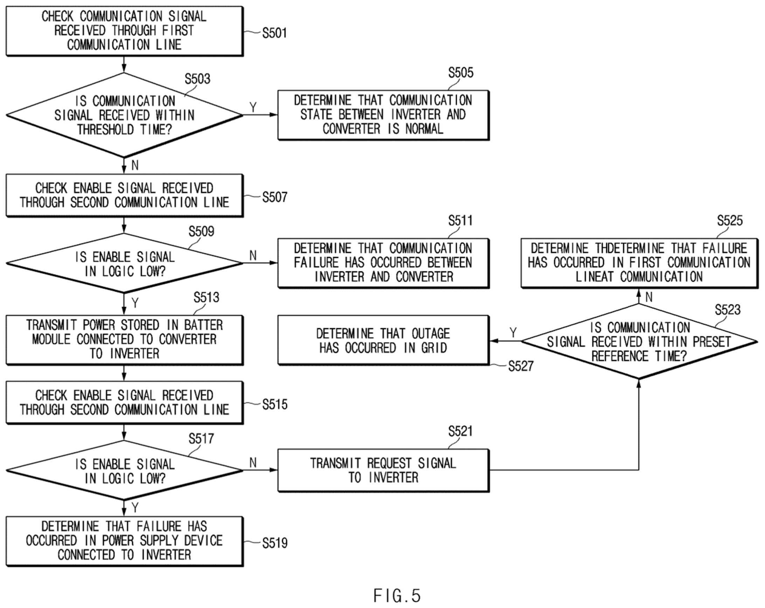

FIGS. 4 and 5 are flowcharts for describing the operation of the energy storage device according to one embodiment disclosed herein.

FIG. 4 is a view for schematically describing an operation of the energy storage system according to one embodiment disclosed herein, and FIG. 5 is a flowchart for specifically describing the operation of the energy storage system according to one embodiment disclosed herein.

Referring to FIG. 4, in operation S401, the energy storage system may determine the communication state between the inverter and the converter.

According to an embodiment, operation S401 may include operations S501 to S505 shown in FIG. 5. The energy storage system may check the communication signal received through the first communication line connected between the inverter and the converter (S501) and determine whether there is the communication signal received through the first communication line within the threshold time (S503). When there is the communication signal exchanged between the inverter and the converter through the first communication line (Y), the energy storage system may determine that the communication state between the inverter and the converter is normal (S505). When there is no communication signal exchanged between the inverter and the converter through the first communication line (N), operation S507 may proceed.

Referring back to FIG. 4, the energy storage system may check the operating state of the inverter (S403).

According to an embodiment, operation S403 may include operations S507 to S511 shown in FIG. 5. The energy storage system may check the enable signal received through the second communication line connected between the inverter and the converter (S507) and check whether the enable signal is in the logic low state (S509). When the enable signal is in the logic high state (N), the energy storage system may determine that the communication failure has occurred between the inverter and the converter (S511). When the enable signal is in the logic low state (Y), operation S513 may proceed.

According to an embodiment, the communication failure may include the LOC state.

Referring back to FIG. 4, the energy storage system may supply power to the inverter (S405).

According to an embodiment, operation S405 may include operations S513 to S521 shown in FIG. 5. The energy storage system may transmit the power stored in the battery module electrically connected to the converter to the inverter (S513). After transmitting power to the inverter, the energy storage system may check the enable signal received through the second communication line (S517). When the enable signal is in the logic low state (Y), the energy storage system may determine that a problem has occurred in the power supply device connected to the inverter (S519). When the enable signal is in the logic high state (N), the energy storage system may transmit the request signal for requesting the communication signal to the inverter (S521).

According to an embodiment, the transmitting of the power stored in the battery module to the inverter may be performed when the voltage of the battery module is a voltage that sufficiently turns on the inverter.

Referring back to FIG. 4, the energy storage system may determine whether the outage has occurred in the grid based on the communication signal received between the inverter and the converter (S407).

According to an embodiment, operation S407 may include operations S523 to S527 shown in FIG. 5. The energy storage system may determine whether the communication signal provided by the inverter in response to the request signal is received within the reference time (S523). When the communication signal is not received within the reference time (N), the energy storage system may determine that a failure has occurred in the first communication line between the inverter and the converter (S525). When the communication signal is received within the reference time (Y), the energy storage system may determine that the outage has occurred in the grid (S527).

According to an embodiment, the communication signal transmitted by the inverter in response to the request signal may be a heartbeat signal.

All components constituting the embodiments have been described above as being coupled as one or operated by being coupled, but are not necessarily limited to these embodiments, and within the scope of the purpose, one or more of all components may be operated by being selectively coupled. In addition, the terms such as "comprise," "constitute," or "have" described above mean that the corresponding component may be inherent unless otherwise stated, and thus should be construed as further including another component rather than excluding another component.

The above description is merely the exemplary description of the technical spirit disclosed herein, and those skilled in the art to which embodiments disclosed herein pertain will be able to variously modify and change the embodiments without departing from the essential characteristics of the embodiments disclosed herein.

Therefore, the embodiments disclosed herein are not intended to limit the technical spirit disclosed herein, but for describing it, and the scope of the technical spirit disclosed herein is not limited by these embodiments. The scope of the technical spirit disclosed herein should be construed by the appended claims, and all technical spirits within the equivalent range should be construed as being included in the scope of this document.

### [DESCRIPTION OF REFERENCE NUMERALS]

| | | | |
|---|---|---|---|
| 10: | power generation system | 20: | grid |
| 30: | load | 1000: | energy storage system |
| 1100: | power conversion unit | 1110: | inverter unit |
| 1111: | inverter | 1112: | power supply device |
| 1200: | battery system | 1210: | converter unit |
| 1211: | DC-DC converter | 1212: | controller |
| 1220: | battery module | | |

## Claims

1. An energy storage system comprising:
an inverter electrically connected to a grid;
a converter configured to receive a communication signal and an enable signal related to an operating state of the inverter from the inverter and connected to the inverter through a power transmission line; and
a controller configured to determine an outage state of the grid based on the communication signal and the enable signal.

2. The energy storage system of claim 1, wherein, when the communication signal is not received for a preset threshold time, the controller checks whether the inverter is in the operating state based on the enable signal received through a second communication line connected between the inverter and the converter.

3. The energy storage system of claim 2, wherein, when the enable signal is in a logic high state representing that the inverter is in the operating state, the controller determines that it is a communication failure state that is a state in which the communication signal is not received between the inverter and the converter.

4. The energy storage system of claim 2, further comprising a battery module connected to the converter to store power supplied from the inverter,
wherein, when the enable signal is in a logic low state representing that the inverter is in a non-operating state, the controller controls the battery module and the converter to supply the power stored in the battery module to the inverter.

5. The energy storage system of claim 4, wherein, when a voltage of the battery module is a voltage that sufficiently turns on the inverter, the controller supplies power to the inverter.

6. The energy storage system of claim 4, wherein the controller checks whether the inverter is in an operating state based on an enable signal received after the power is supplied to the inverter.

7. The energy storage system of claim 6, wherein, when the enable signal received after the power is supplied is in the logic low state representing that the inverter is in the non-operating state, the controller determines that a failure has occurred in a power supply device connected to the inverter to drive the inverter.

8. The energy storage system of claim 6, wherein, when the enable signal received after the power is supplied is in a logic high state representing that the inverter is in an operating state, the controller controls the converter to transmit a request signal for requesting a communication signal from the inverter to the inverter.

9. The energy storage system of claim 8, wherein the communication signal is received through a first communication line connected between the inverter and the converter, and
when a communication signal provided by the inverter in response to the request signal is not received within a preset reference time, the controller determines that a failure has occurred in the first communication line.

10. The energy storage system of claim 8, wherein, when a communication signal provided by the inverter in response to the request signal is received within the threshold time, the controller determines that an outage has occurred in the grid.

11. A method of operating an energy storage system, comprising:
determining a communication state between an inverter and a converter;
determining an operating state of the inverter based on the communication state;
supplying power to the inverter; and
determining an outage state of a grid electrically connected to the inverter based on a communication signal received between the inverter and the converter.

12. The method of claim 11, wherein the determining of the communication state between the inverter and the converter includes determining whether the communication signal received through a first communication line connected between the inverter and the converter is received for a preset threshold time.

13. The method of claim 12, wherein the determining of the operating state of the inverter includes:
receiving an enable signal related to the operating state of the inverter through a second communication line connected between the inverter and the converter; and
determining that a communication fail has occurred between the inverter and the converter when the enable signal is in a logic high state.

14. The method of claim 13, wherein the supplying of the power to the inverter includes:
controlling a battery module and the converter to supply power stored in the battery module connected to the converter to the inverter; and
determining that a failure has occurred in a power supply device connected to the inverter to supply power to the inverter when the enable signal received through the second communication line is in a logic low state and transmitting a request signal for requesting a communication signal from the inverter to the inverter when the enable signal is in a logic high state.

15. The method of claim 14, wherein the supplying of the power to the inverter is performed when a voltage of the battery module is a voltage that sufficiently turns on the inverter.

16. The method of claim 14, wherein the determining of the outage state of the grid includes determining that a failure has occurred in the first communication line when the communication signal provided by the inverter in response to the request signal is not received within a preset reference time and determining that an outage has occurred in the grid when the communication signal provided by the inverter in response to the request signal is received within the preset reference time.
